Europäisches Patentamt

European Patent Office

Office européen des brevets

(19)

(11) Veröffentlichungsnummer: **0 134 917 B1**

(12) **EUROPÄISCHE PATENTSCHRIFT**

(45) Veröffentlichungstag der Patentschrift:
21.02.90

(21) Anmeldenummer: 84106689.7

(22) Anmeldetag: 12.06.84

(51) Int. Cl.⁵: **G 11 B 23/04**, G 11 B 15/07

(54) Verfahren zum erkennen spezifischer Kenndaten einer Magnetbandkassette.

(30) Priorität: 27.08.83 DE 3330945

(43) Veröffentlichungstag der Anmeldung:
27.03.85 Patentblatt 85/13

(45) Bekanntmachung des Hinweises auf die Patenterteilung:
21.02.90 Patentblatt 90/8

(84) Benannte Vertragsstaaten:
AT BE CH DE FR GB IT LI

(56) Entgegenhaltungen:
DE-A- 2 709 987
DE-A- 2 901 575
DE-A- 3 228 731
DE-A- 3 402 375
US-A- 3 712 559
US-A- 4 280 136

PATENTS ABSTRACTS OF JAPAN, Band 6, Nr. 137
(P-130) [1015], 24. Juli 1982; & JP - A - 57 60 575
(MITSUBISHI DENKI K.K.) 12.04.1982
PATENTS ABSTRACTS OF JAPAN, Band 6, Nr. 188
(P-144) [1066], 28. September 1982; & JP - A - 57 100 666
(MITSUBISHI DENKI K.K.) 22.06.1982
PATENTS ABSTRACTS OF JAPAN, Band 7, Nr. 75
(P-187) [1220], 29. März 1983; & JP - A - 58 6563 (SONY
K.K.) 14.01.1983

(73) Patentinhaber: GRUNDIG E.M.V. Elektro-Mechanische
Versuchsanstalt Max Grundig holländ. Stiftung & Co.
KG., Kurgartenstrasse 37, D-8510 Fürth/Bay. (DE)

(72) Erfinder: Mangold, Hans, Verstorben (DE)
Erfinder: Hegendörfer, Max, Pautzfelder Strasse 31,
D-8551 Forchheim (DE)
Erfinder: Schülein, Reinhard, Humboldtstrasse 6,
D-8501 Weiherhof (DE)

## Beschreibung

Die Erfindung betrifft ein Verfahren zum Erkennen spezifischer Kenndaten einer Magnetbandkassette in einem Magnetbandgerät mit den im Oberbegriff des Anspruchs 1 angegebenen Merkmalen.

Zur Erkennung spezifischer Kenndaten einer Magnetbandkassette sind bereits verschiedene Verfahren bekannt, die nach dem mechanischen Abtastprinzip arbeiten. Beim Aufzeichnungssystem Video 2000 beispielsweise wird die Kassette mit sechs aufbrechbaren Lochungen versehen, in die geräteseitig eingebaute Codierschalter mit Fühlstiften eingreifen. Durch dieses Verfahren sind theoretisch $2^6 = 64$ Informationen an der Kassette anbringbar. Praktisch wird jedoch nur für die Spielzeitangabe, für die drei Lochungen vorgesehen sind, die theoretische Möglichkeit mit $2^3 = 8$ Informationen ausgeschöpft, während die restlichen Lochungen nicht für komplette Datenworte genutzt werden. Nähere Einzelheiten sind den Grundig Technischen Informationen Nr. 3, 1981, Seite 121 und 122 zu entnehmen.

Bei Tonbandkassetten ist bekannt, durch Ausbrüche an der Kassettenrückseite Gerätefunktionen wie Aufnahmesperre oder Bandsortenumschaltung vorzunehmen, dabei ist der Befehlsvorrat jedoch sehr beschränkt.

Ausser mechanischen Abtastverfahren für spezifische Kassetten-Kenndaten sind auch fotoelektrische Verfahren bereits bekannt, bei denen auf einer aufklebbaren Kassetten-Etikette, die unabhängig vom Herstellungsprozess am Kassettengehäuse anbringbar ist, Markierungen über aufnahmespezifische Parameter angebracht sind, die im Gerät fotoelektrisch abgetastet werden. Dieser Stand der Technik ist insbesondere aus der DE-OS 29 01 575 entnehmbar. Die nach dieser Offenlegungsschrift vorgeschlagene fotoelektrische Abtastung liefert die gewünschten Daten in einem parallel bzw. zeitlich simultan verlaufenden Abtastvorgang. Es sind also für den Fall, dass zahlreiche Informationen gewünscht werden, auch mehrere fotoelektrische Sensoren notwendig.

Weiterhin ist aus der US-A 4 280 136 ein Verfahren bekannt, bei dem im Rahmen der Magnetbandkassettenfertigung die auf einem Etikett angebrachten spezifischen Kenndaten der Kassette unter Verwendung einer Kamera gelesen und mit auf dem Vorspann des Magnetbandes aufgebrachten Kenndaten verglichen werden. Bei fehlender Übereinstimmung der Kenndaten wird die jeweilige Kassette ausgesondert.

Ferner ist es aus den Patent Abstracts of Japan, Band 6, Nr. 137 (P-130) [1015], 24. Juli 1982; & JP-A-5760575, bekannt, am Gehäuse einer Videomagnetbandkassette einen Informationsspeicher anzubringen, in welchem Informationen über den Inhalt der Kassette abgespeichert sind. Durch Auslesen des Informationsspeichers bei der Wiedergabe erhält der Benutzer eine Information über den Inhalt der Kassette. Dem entspricht der Oberbegriff von Anspruch 1.

Demgegenüber ist es Aufgabe der Erfindung, ein Verfahren der im Oberbegriff des Anspruchs 1 angegebenen Art derart weiterzubilden, dass eine serielle, also zeitlich sequentielle Abtastung der Kenndaten auch bei bereits eingeschobener Kassette möglich ist, wenn die Stromversorgung des Gerätes aussetzt und das Gerät wieder eingeschaltet wird.

Diese Aufgabe wird bei einem Verfahren der im Oberbegriff des Anspruchs 1 angegebenen Art durch die im kennzeichnenden Teil des Anspruchs 1 angegebenen Merkmale gelöst. Eine vorteilhafte Ausgestaltung ist im Anspruch 2 beschrieben.

Die Vorteile der Erfindung bestehen insbesondere darin, dass der fotoelektrische Abtaster fest im Gerät eingebaut werden kann, weil die zum Abtasten der Kenndaten erforderliche Relativbewegung zwischen Kassette und Abtaster durch die Bewegung der Kassette zustande kommt.

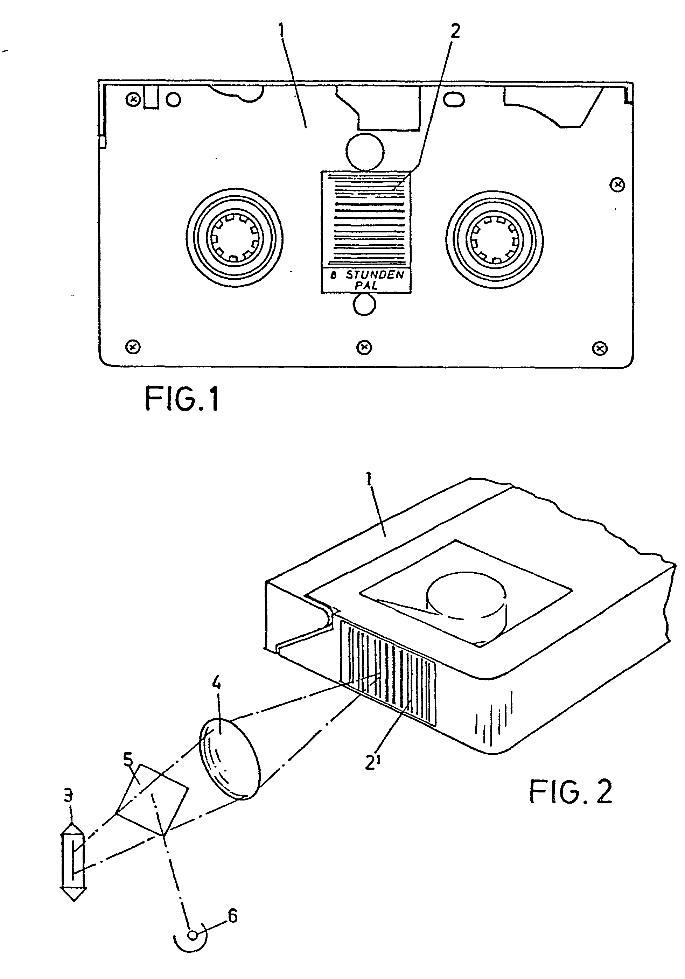

Mit Hilfe der Figuren 1 und 2 soll das erfindungsgemässe Verfahren näher erläutert werden.

Figur 1 zeigt die Unterseite der Kassette 1 mit den Aussparungen für die geräteseitigen Wickelantriebe. Auf die Kassettenunterseite ist das Etikett 2 aufgeklebt, das ausser dem digital codierten Strichmuster gegebenenfalls auch unverschlüsselte Informationen wie z.B. Spielzeit und Fernsehstandard enthält. Bei der Bewegung der Kassette senkrecht zum Strichmuster, wie sie beim Einschubvorgang zustande kommt, ist die Abtastung des Strichmusters ohne grossen Aufwand möglich.

Figur 2 zeigt beispielhaft, wie die Etikette mit Strichmuster an anderer Stelle der Kassette angebracht werden. Ausserdem zeigt Figur 2 ein Beispiel für die Gestaltung des an sich bekannten fotoelektrischen Abtasters. An der Kassette 1 ist seitlich das Strichmuster 2' angebracht, die Einschubbewegung der Kassette erfolgt wieder senkrecht zum Strichmuster.

Die fadenförmige Lichtquelle 3, die auch durch einen beleuchteten Spalt ersetzt werden kann, wird über die Optik 4 auf dem Strichmuster 2' abgebildet. Das reflektierte Licht wird nach dem Autokollimationsprinzip über die Optik 4 und den halbdurchlässigen Spiegel 5 dem Fotodetektor 6 zugeleitet, der die Lichtreflexion in das elektrische Signal wandelt, das der Auswerteschaltung und dem Speicher im Gerät zugeführt wird.

Die beschriebene fotoelektrische Abtasteinrichtung ist nur beispielhaft zu verstehen. Es können auch sogenannte Lichtgriffelverfahren zur Anwendung kommen, auch die Abtastung über Lichtleiter ist möglich. Ausserdem kann anstelle von sichtbarem Licht auch unsichtbare Strahlung, wie z.B. Infrarotstrahlung verwendet werden.

Bei manchen Geräten zur magnetischen Aufzeichnung und/oder Wiedergabe wird die Kassette durch eine senkrechte Bewegung eingeschoben, d.h. die Bewegung findet senkrecht zur Zeichnungsebene nach Figur 1 statt. In diesem Fall muss das Strichmuster-Etikett nach Figur 2

seitlich angebracht werden, jedoch gegenüber der Darstellung um 90° gedreht, damit die Abtastbewegung senkrecht zum Strichmuster erfolgt.

Nach einem wesentlichen Merkmal der Erfindung wird für den Fall, dass bei eingeschobener Kassette die Stromversorgung des Gerätes aussetzt, beim Neueinschalten automatisch eine Kassettenbewegung ausgelöst, derart, dass der Strichcode gelesen wird. Hierzu ist es besonders vorteilhaft, einen in beiden Abtastrichtungen lesbaren Code zu verwenden.

Als Kenndaten, die im Strichmuster enthalten sein können, kommen die Spielzeit, die Banddicke, das Bandmaterial, die Bandlänge, der Farbfernsehstandard, die Art der Tonaufzeichnung, aber auch Informationen über den Inhalt bei einer bespielten Kassette in Betracht.

## Patentansprüche

1. Verfahren zum Erkennen spezifischer Kenndaten einer Magnetbandkassette in einem Magnetbandgerät, insbesondere einer Videomagnetbandkassette, wobei die Kenndaten verschlüsselt als digitaler Code in Form eines aus dunklen und hellen Streifen bestehenden Strichmuster auf einem am Magnetbandkassettengehäuse aufgebrachten Etikett angebracht sind und fotoelektrisch gelesen werden, dadurch gekennzeichnet, dass
– für den Fall, dass bei eingeschobener Kassette die Stromversorgung des Gerätes aussetzt, beim Neueinschalten des Gerätes die Kassette automatisch eine für das fotoelektrische Lesen der Kenndaten notwendige Bewegung ausführt, und
– die gelesenen Kenndaten als Digitalsignale in einem Digitalspeicher abgelegt und zur Steuerung des Ablaufs der Gerätefunktionen durch eine Mikroprozessor verwendet werden.

2. Verfahren nach Anspruch 1, dadurch gekennzeichnet, dass ein Code Verwendung findet, der in beiden Bewegungsrichtungen lesbar ist.

## Revendications

1. Procédé pour identifier des données caractéristiques spécifiques d'une cassette à bande magnétique dans un dérouleur de bande magnétique, notamment une cassette à bande magnétique vidéo, les données caractéristiques, codées selon un code numérique, sous la forme d'un modèle de barres constitué par des bandes sombres et claires, étant disposées sur une étiquette placée sur le boîtier de la cassette à bande magnétique et étant lues par voie photoélectrique, caractérisé en ce que
– dans le cas où, lorsqu'une cassette est insérée, l'alimentation en courant de l'appareil tombe en panne, lors du rebranchement de l'appareil, la cassette exécute automatiquement un déplacement nécessaire pour la lecture photoélectrique des données caractéristiques, et
– les données caractéristiques lues sont mémorisées sous forme de signaux numériques dans une mémoire numérique et sont utilisées par un microprocesseur pour la commande du déroulement des fonctions de l'appareil.

2. Procédé selon la revendication 1, caractérisé en ce qu'on utilise un code qui peut être lu dans les deux directions de déplacement.

## Claims

1. Method of detecting specific characteristic data of a magnetic tape cassette in a magnetic tape device, in particular of a video magnetic tape cassette, the characteristic data being provided encoded as digital code in the form of a bar pattern consisting of dark and light stripes on a label attached to the magnetic tape cassette housing and being read photoelectrically, characterized in that
– in the event that the power supply of the device is switched off with the cassette loaded, the cassette automatically performs a movement necessary for the photoelectric reading of the characteristic data when the device is switched on again, and
– the characteristic data read are stored as digital signals in a digital memory and are used for controlling the sequence of the device functions by a microprocessor.

2. Method according to Claim 1, characterized in that a code is used which can be read in both directions of movement.

FIG.1

FIG. 2